# EUROPÄISCHE PATENTSCHRIFT

(11) **EP 2 675 193 B1**
(45) Veröffentlichungstag und Bekanntmachung des Hinweises auf die Patenterteilung: **28.08.2019**
(21) Anmeldenummer: 13160112.2
(22) Anmeldetag: 20.03.2013
(51) Int. Cl.: H04W 4/00

(54) **Chipkarte, Endgerät mit Chipkarte sowie Verfahren zum Modifizieren einer Chipkarte**
Chip card, terminal having chip card and a method for modifying a chip card
Carte à puce, terminal avec carte à puce et procédé de modification d'une carte à puce

(30) Priorität: 27.03.2012 DE 102012006222
(43) Veröffentlichungstag der Anmeldung: 18.12.2013
(73) Patentinhaber: Vodafone GmbH, 40549 Düsseldorf (DE)
(72) Erfinder: Helmreich, Frank, 46519 Alpen (DE); Dohmann, Dierk, 40547 Düsseldorf (DE)
(74) Vertreter: Müller & Schubert

(56) Entgegenhaltungen:
- US-A1- 2005 037 737
- US-A1- 2011 269 423

## Beschreibung

Die vorliegende Erfindung betrifft zunächst eine Chipkarte oder eine Chipkartenapplikation gemäß dem Oberbegriff von Patentanspruch 1. Weiterhin betrifft die Erfindung ein Endgerät für ein Kommunikationsnetz, welches eine Chipkarte oder eine Chipkartenapplikation aufweist. Schließlich betrifft die Erfindung auch ein Verfahren zum Modifizieren von auf einer Chipkarte oder Chipkartenapplikation befindlichen Parameterdaten.

Im Stand der Technik sind solche Chipkarten oder Chipkartenapplikationen beispielsweise als SIM-Karten (Subscriber Identity Module) oder SIM-Applikationen bekannt. Derartige SIM-Karten oder SIM-Applikationen sind für den Einsatz in einem Endgerät gedacht, wobei das Endgerät einem Kommunikationsnetz zugeordnet ist. Beispielsweise kann es sich bei dem Kommunikationsnetz um ein Mobilfunknetz handelt. In diesem Fall könnte es sich bei dem Endgerät um ein mobiles Endgerät, etwa ein Mobiltelefon, handeln.

Auf der SIM-Karte oder in der SIM-Applikation ist wenigstens ein Datenfeld vorgesehen, in dem sich Parameterdaten befinden. Solche Parameterdaten sind erforderlich, damit der Nutzer eines Endgeräts, in welchem die SIM-Karte oder die SIM-Applikation implementiert ist, sein Endgerät in dem Kommunikationsnetz verwenden kann.

Oftmals ist es erforderlich, dass die Parameterdaten auf der SIM-Karte oder der SIM-Applikation verändert, has heißt modifiziert werden, beispielsweise zu Testzwecken oder im Rahmen von Simulationen.

Bei aus dem Stand der Technik bekannten Lösungen werden Einträge der SIM-Karte oder SIM-Applikation über einen Kartenleser direkt auf die SIM-Karte oder in die SIM-Applikation geschrieben. Hierbei ist es notwendig, die SIM aus dem Gerät zu entfernen. Aus diesem Grund ist die bekannte Lösung sehr aufwändig und damit nachteilig.

Eine Verbesserung würde eine Flexleitung aus dem Gerät heraus zu einem SIM Simulator erreichen. In diesem Fall ist jedoch immer noch eine starre Verbindung zwischen einer Rechnereinrichtung und dem Endgerät gegeben. Bei der Lösung mit SIM Simulator ist es zusätzlich nötig, parallel eine echte SIM zu betreiben. Dieses ist nötig, um die Sicherheitseinrichtungen wie Sabotageschutz, Flankensteilheiten der elektronischen Bauteile und dergleichen zu implementieren. Eine Simulation ist technisch aufwändig und würde bei kleinsten Abweichungen das System zusammen brechen lassen. Beispielsweise könnte der Angriffsschutz der SIM auslösen und die SIM abschalten. Die durch diesen technischen Aufwand betriebene Lösung ist sehr teuer, was ein weiterer negativer Aspekt ist.

In anderem Zusammenhang ist aus der DE 10 2009 015 248 A1 eine Lösung zum Testen von Endgeräten bekannt. Dazu wird von einem netzwerkseitigen Testserver ein Testprogramm erzeugt und auf das zu testende Endgerät übertragen, wo das Testprogramm anschließend ausgeführt wird. Das Testprogramm kann ein Applet sein, das seitens der SIM ausgeführt wird. Das Applet kann "Over The Air" auf das Endgerät übertragen werden beispielsweise per SMS.

Aus der DE 101 28 948 A1 ist bekannt, dass eine SIM ein "SIM Applikation Toolkit (SAT)" aufweisen kann. Ein solches SAT ist eine art Ausführungsprogramm, das auf der SIM implementiert wird, und das es ermöglicht, dass über die SIM verschiedene Aktionen initiiert werden können. Es ist bereits bekannt, dass das SAT von außen, etwa "Over The Air" geändert werden kann.

Mit den bekannten Lösungen ist es jedoch nicht möglich, auf der SIM befindliche Parameterdaten, bei denen es sich insbesondere um die grundlegenden Daten handelt, die auf der SIM gespeichert sind, zu verändern.

Die US 2005/0037737 A1 beschreibt eine Lösung, mittels derer Informationen einer Telefoneinrichtung, die mit einer SIM-Karte ausgestattet ist, gemanagt werden können. In der US 2011/0269423 A1 ist eine Lösung offenbart, bei der Nutzergeräte in drahtlosen Netzwerken authentifiziert werden können.

Der vorliegenden Erfindung liegt die Aufgabe zugrunde, eine Lösung bereitzustellen, mit der die zuvor geschilderten Nachteile umgangen werden können. Insbesondere soll es auf einfache und kostengünstige Weise ermöglicht werden, dass auf einer Chipkarte oder in einer Chipkartenapplikation gespeicherte Parameterdaten verändert werden können.

Diese Aufgabe wird erfindungsgemäß gelöst durch die Chipkarte oder Chipkartenapplikation mit den Merkmalen gemäß dem unabhängigen Patentanspruch 1, das Endgerät für ein Kommunikationsnetz mit den Merkmalen gemäß dem unabhängigen Patentanspruch 4 sowie das Verfahren zum Modifizieren von auf einer Chipkarte oder Chipkartenapplikation befindlichen Parameterdaten mit den Merkmalen gemäß dem unabhängigen Patentanspruch 8. Weitere Merkmale und Details der Erfindung ergeben sich aus den Unteransprüchen, der Beschreibung sowie den Zeichnungen. Dabei gelten Merkmale und Details, die im Zusammenhang mit einem Erfindungsaspekt beschreiben sind, selbstverständlich vollumfänglich stets auch im Zusammenhang mit den jeweils anderen Erfindungsaspekten, und umgekehrt, so dass das bezüglich eines Erfindungsaspekt Gesagte stets im vollen Umfang auch im Zusammenhang mit den anderen Erfindungsaspekten als offenbart gilt.

Ein Grundgedanke der vorliegenden Erfindung besteht darin, dass nunmehr eine Applikation auf der Chipkarte oder in der Chipkartenapplikation vorgesehen ist, die zur Erzeugung und/oder Bereitstellung von veränderlichen Parameterdaten ausgebildet ist. Mit Hilfe dieser Applikation können insbesondere Einstellungen der Chipkarte oder Chipkartenapplikation, insbesondere ohne Kartenleser und/oder Flexleitungsanschluss, direkt in der Chipkarte oder der Chipkartenapplikation, und damit direkt auf einem Endgerät, in dem die Chipkarte oder Chipkartenapptikation implementiert ist, verändert werden. Dadurch wird es insbesondere möglich, ohne besonderen technischen Aufwand im Live-Netz und Freifeld die Funktionen und Einstellungen der Chipkarte oder Chipkartenapplikation zu verändern.

Gemäß dem ersten Aspekt der Erfindung wird eine Chipkarte oder Chipkartenapplikation in Form einer SIM oder SIM-Applikation oder einer USIM oder USIM-Applikation für den Einsatz in einem Endgerät, welches einem Kommunikationsnetz zugeordnet ist, bereitgestellt, welche die Merkmale des unabhängigen Patentanspruchs 1 aufweist.

Gemäß dem ersten Aspekt der Erfindung wird eine Chipkarte oder Chipkartenapplikation bereitgestellt. Bei einer Chipkarte handelt es sich insbesondere um eine Karte, die in ein Endgerät eingebracht, beispielsweise eingesteckt oder eingelegt wird. Die Chipkarte dient insbesondere zur Identifikation eines Nutzers in einem Kommunikationsnetz. Mittels einer solchen Chipkarte werden von einem Netzbetreiber dem Teilnehmer Anschlüsse zu dem Netzwerk, beispielsweise Telefonanschlüsse und/oder Datenanschlüsse, zur Verfügung gestellt. Über die Chipkarte wird insbesondere das einem Teilnehmer zugeordnete Endgerät einem Kommunikationsnetz zugeordnet und in diesem authentifiziert. Bei einer Chipkartenapplikation handelt es sich um die gleiche Funktionalität. Allerdings ist diese Funktionalität nicht mehr auf einer im Vergleich zum Endgerät separaten Karte untergebracht. Vielmehr sind diese Funktionalitäten fest im Endgerät implementiert, beispielsweise über eine schaltungstechnische und/oder softwarebasierte Ausgestaltung. Es ist eine eine Ausgestaltung in Form einer SIM oder SIM-Applikation (SIM = Subscriber Identity Module) oder USIM oder USIM-Applikation (USIM = Universal Subscriber Identity Module) realisiert.

Die Chipkarte oder die Chipkartenapplikation ist für den Einsatz in einem Endgerät ausgebildet, welches einem Kommunikationsnetz zugeordnet ist. Bei dem Kommunikationsnetz kann es sich bevorzugt um ein Telekommunikationsnetz, insbesondere um ein Mobilfunknetz handeln, wobei die Erfindung nicht auf bestimmte Arten oder Typen von Kommunikationsnetzen beschränkt ist. Das Endgerät ist entsprechend der Ausgestaltung des Kommunikationsnetzes ausgebildet. Dabei kann das Endgerät in beliebiger Weise ausgebildet sein. Wichtig ist lediglich, dass es in dem Kommunikationsnetz, dem es zugeordnet ist, bestimmungsgemäß genutzt werden kann. Beispielsweise kann in einem Mobilfunknetz das Endgerät in Form eines Mobiltelefons ausgebildet sein. Im weiteren Verlauf wird die vorliegende Erfindung zur Verdeutlichung des öfteren anhand eines einem Mobilfunknetz zugeordneten Mobiltelefons beschrieben, ohne dass die Erfindung auf diese konkrete Ausgestaltung beschränkt ist.

Die erfindungsgemäße Chipkarte oder Chipkartenapplikation weist wenigstes ein Datenfeld mit veränderlichen Parameterdaten auf. Ein Datenfeld ist insbesondere die kleinste eigenständige Einheit eines Datensatzes. Ein Datenfeld ist insbesondere gekennzeichnet durch den Feldnamen, den Datentyp, beispielsweise numerisch oder alphanumerisch, die Länge des Feldes, beispielsweise in Zeichen oder Byte, sowie den Feldinhalt. Bei den Parameterdaten handelt es sich um Daten bezüglich der Identifikation und/oder Authentifizierung eines Nutzers und/oder des Endgeräts in einem Kommunikationsnetz.

Erfindungsgemäß weist die Chipkarte oder Chipkartenapplikation nunmehr eine Applikation, insbesondere eine Applikationssoftware auf, die zusätzlich zu dem wenigstens einen Datenfeld mit veränderlichen Parameterdaten auf der Chipkarte oder in der Chipkartenapplikation implementiert ist. Die Applikation ist insbesondere eine Art Anwendungssoftware. Die Applikation wird zusätzlich zu dem wenigstens einen Datenfeld mit den Parameterdaten auf der Chipkarte oder in der Chipkartenapplikation implementiert. Sie ist bevorzugt an sich unveränderlich. Über die Applikation ist es jedoch möglich, die Einstellungen auf der Chipkarte oder in der Chipkartenapplikation zu verändern. Wie dies im Einzelnen geschehen kann, wird weiter unten in größerem Detail beschrieben. Damit stellt die Applikation einen wesentlichen Unterschied zu dem im Stand der Technik bereits bekannten "SIM Applikation Toolkit (SAT)" dar. Das SAT kann sich zwar auch auf der Chipkate befinden. Allerdings ist es nur möglich, das SAT an sich zu verändern. Das SAT hat nicht die Möglichkeit, die auf der Chipkarte oder in der Chipkartenapplikation vorliegenden Einstellungen, dass heißt die entsprechenden Parameterdaten zu ändern.

Auf der Chipkarte oder in der Chipkartenapplikation existieren beispielsweise Datenfelder, die freigegeben werden müssen, damit die Inhalte der Datenfelder geändert werden können. Die erfindungsgemäß vorgesehene Applikation kennt diese Datenfelder, in die veränderte Parameterdaten hineingeschrieben werden können und tut dies auch.

Die vorliegende Erfindung ist nicht auf eine bestimmte Anzahl von Datenfeldern, eine bestimmte Anzahl von Parameterdaten oder bestimmte Typen von Parameterdaten beschränkt. Über die Applikation, die neben den Datenfeldern mit Parameterdaten zusätzlich auf der Chipkarte oder in der Chipkartenapplikation implementiert ist, können insbesondere bestehende Einträge in bestimmten Datenfeldern geändert werden, oder es können Einträge ermöglicht werden.

Die Applikation ist zur Erzeugung und/oder Bereitstellung von den veränderlichen Parameterdaten ausgebildet. Auf der einen Seite ist es möglich, dass die veränderlichen Parameterdaten in der Applikation selbst erzeugt werden. Dazu kann beispielsweise vorgesehen sein, dass die zu verändernden Parameterdaten in die Applikation eingegeben werden, und dass die Applikation die Daten anschließend zu dem entsprechenden Datenfeld überträgt und in dieses hineinschreibt. Es ist aber auch möglich, dass die veränderlichen Parameterdaten an sich ganz oder teilweise an einer anderen Stelle generiert werden, dass die generierten Parameterdaten zur Applikation übertragen werden, beispielsweise über eine geeignete Schnittstelle, dass in der Applikation dann eine Zuordnung der veränderten Parameterdaten zu den entsprechenden Datenfeldern erfolgt und dass die Parameterdaten gegebenenfalls noch modifiziert, aufbereitet oder bearbeitet werden. Im letztgenannten Fall dient die Applikation insbesondere dazu, die veränderten Parameterdaten in der erforderlichen Weise bereitzustellen.

Schließlich ist eine Schnittstelle zwischen der Applikation und dem wenigstens einen Datenfeld mit veränderlichen Parameterdaten vorgesehen. Über diese Schnittstelle können die veränderten Parameterdaten von der Applikation zu dem entsprechenden wenigstens einen Datenfeld übertragen werden. Über die Schnittstelle werden die Parameterdaten von der Applikation in das Datenfeld geschrieben, oder es werden bestehende Parameterdaten im Datenfeld durch die veränderten Parameterdaten überschrieben.

Weiterhin weist die Chipkarte oder Chipkartenapplikation eine erste Starteinrichtung zum Durchführen einer ersten Startprozedur für den anschließenden Betrieb der Chipkarte oder Chipkartenapplikation in einem Betriebsmodus, sowie eine zweite Starteinrichtung zum Durchführen einer zweiten Startprozedur für die Durchführung einer Entblockierungsprozedur der Chipkarte oder Chipkartenapplikation auf. Hierbei handelt es sich um eine Möglichkeit, wie eine Chipkarte oder Chipkartenapplikation, die unerwünschter Weise bei der Modifikation der Parameterdaten geblockt wurde, wieder entblockt werden kann. Dazu ist eine zweite Startprozedur zum Starten vorgesehen.

Bevorzugt ist vorgesehen, dass der ersten Starteinrichtung eine erste PIN (Persönliche Identifikations-Nummer) zugeordnet ist und dass der zweiten Starteinrichtung eine zweite PIN zugeordnet ist. Bei der ersten PIN kann es sich beispielsweise um die für den normalen Betrieb gedachte Arbeits-PIN handeln. Bei der zweiten PIN kann es sich um eine besondere Entblockierungs-PIN handeln. Wenn die Chipkarte oder Chipkartenapplikation, beziehungsweise ein Endgerät, auf dem die Chipkarte oder die Chipkartenapplikation implementiert ist, blockiert ist und die zweite PIN, die Entblockierungs-PIN, eingegeben wird, fährt das Endgerät wieder hoch. Bevorzugt bucht sich das Endgerät jedoch nicht im Kommunikationsnetz ein. Vielmehr kann dem Endgerät vermittelt werden, dass es an einem Simulator angeschlossen ist. Dadurch wird ermöglicht, dass die blockierten Einstellungen zurückgesetzt, das heißt resetet, werden. Dann wird es möglich, erneut an die Werkzeuge zu gelangen, so dass weitere Änderungen der Parameterdaten vorgenommen werden können, damit das Endgerät wieder im normalen Betriebsmodus angefahren und betrieben werden kann. Ist dies geschehen, kann das Endgerät beispielsweise wieder über die erste PIN aktiviert werden.

Handelt es sich bei dem Kommunikationsnetz um ein Mobilfunknetz, kann die zweite Starteinrichtung bevorzugt für die Durchführung einer Entblockierungsprozedur der Chipkarte oder Chipkartenapplikation ausgebildet sein, bei der der MCC-Wert auf 001 und der MNC-Wert auf 01 gesetzt wird. Bei dem MCC-Wert handelt es sich um den aus drei Ziffern bestehenden "Mobile Country Code". Bei dem MNC-Wert handelt es sich um den aus zwei Ziffern bestehenden "Mobile Network Code". Der Mobile Country Code ist eine festgelegte Länderkennung, die zusammen mit dem Mobile Network Code zur Identifizierung eines Mobilfunknetzes verwendet wird.

Gemäß einem weiteren Aspekt der Erfindung wird ein Endgerät für ein Kommunikationsnetz, insbesondere für ein Mobilfunknetz, bereitgestellt, das eine wie vorstehend beschriebene erfindungsgemäße Chipkarte oder Chipkartenapplikation aufweist. Bezüglich der Merkmale und Details sowie der Funktionsweise des Endgeräts wird hinsichtlich der Offenbarung deshalb vollinhaltlich auch auf die vorstehenden Ausführungen zur Chipkarte oder Chipkartenapplikation Bezug genommen und verwiesen.

Weiterhin weist das Endgerät eine Eingabeapplikation zur Generierung von Parameterdaten für die Chipkarte oder Chipkartenapplikation und zur Bereitstellung der generierten Parameterdaten in der Applikation zur Erzeugung und/oder Bereitstellung von den veränderlichen Parameterdaten auf. Die Eingabeapplikation dient insbesondere dazu, dass die Einträge in den entsprechenden Datenfeldern der Chipkarte oder Chipkartenapplikation vorgenommen werden können.

Bevorzugt ist vorgesehen, dass die Applikation zur Erzeugung und/oder Bereitstellung von den veränderlichen Parameterdaten, die auf der Chipkarte oder in der Chipkartenapplikation implementiert ist, ein Bestandteil der Eingabeapplikation ist, Insbesondere kann auch vorgesehen sein, dass es sich bei der Eingabeapplikation um diese Applikation zur Erzeugung und/oder Bereitstellung von den veränderlichen Parameterdaten, die auf der Chipkarte oder in der Chipkartenapplikation implementiert ist, handelt. In anderer Ausgestaltung kann vorgesehen sein, dass die Eingabeapplikation eine Schnittstelle zu der Applikation zur Erzeugung und/oder Bereitstellung von den veränderlichen Parameterdaten aufweist. In diesem Fall wirkt die Eingabeapplikation mit der Applikation zusammen. Die Eingabeapplikation ist insbesondere auf/in dem Endgerät implementiert.

In weiterer Ausgestaltung ist vorgesehen, dass die Eingabeapplikation eine Schnittstelle zu einer im Endgerät vorgesehenen Eingabeeinrichtung aufweist und/oder dass die Eingabeapplikation eine Schnittstelle zu einer vom Endgerät räumlich getrennten Eingabeeinrichtung aufweist. Im erstgenannten Fall befindet sich die Eingabeeinrichtung im Endgerät. Das bedeutet, dass die Veränderung der Parameterdaten im Endgerät selbst oder durch das Endgerät selbst vorgenommen werden kann. Im letztgenannten Fall kann die Eingabe entfernt zum Endgerät, das heißt remote, erfolgen. Über die Eingabeeinrichtung werden die zu verändernden Parameterdaten, beispielsweise die entsprechenden Werte, eingegeben, beispielsweise in der Eingabeapplikation oder direkt in der Applikation auf der Chipkarte oder der Chipkartenapplikation. Bei der Eingabeeinrichtung kann es sich beispielsweise um ein Bedienfeld handeln, etwa eine Tastatur, ein Tastenfeld und dergleichen. Bei einem Mobiltelefon handelt es sich bei der Eingabeeinrichtung beispielsweise um das Tastaturfeld des Mobiltelefons.

In weiterer Ausgestaltung weist das Endgerät eine Einrichtung zum Refresh und/oder Neustart des Endgeräts aufweist. Unter einem Refresh ist insbesondere ein Vorgang zu verstehen, bei dem oder durch den eine Auffrischung von Informationen erfolgt. Durch die Einrichtung kann das Endgerät, beispielsweise mittels Pushbutton, refreshed oder neu gestartet werden, insbesondere um die entsprechenden neuen Einträge zu aktivieren.

Sollte das Endgerät nun eine Fehlfunktion haben oder nicht mehr bedienbar sein, kann es über die weiter oben bereits beschriebene zweite Startmöglichkeit gestartet und die Einstellungen der Applikation auf der Chipkarte oder Chipkartenapplikation überbrückt werden. Das kann bevorzugt über eine zweite Startprozedur mit den Einstellungen des MCC und MNC von 001 & 01 geschehen. Das Endgerät denkt nun an einem Simulator angeschlossen zu sein und startet ganz normal.

Gemäß einem weiteren Aspekt der Erfindung wird ein Verfahren zum Modifizieren von auf einer Chipkarte oder Chipkartenapplikation befindlichen Parameterdaten bereitgestellt, wobei die Parameterdaten in wenigstens einem Datenfeld der Chipkarte oder der Chipkartenapplikation gespeichert sind, wobei die Chipkarte oder Chipkartenapplikation eine Applikation, insbesondere eine Applikationssoftware aufweist, die zusätzlich zu dem wenigstens einen Datenfeld mit veränderlichen Parameterdaten auf der Chipkarte oder in der Chipkartenapplikation implementiert ist. Das Verfahren ist erfindungsgemäß durch folgende Schritte gekennzeichnet:
In der Applikation werden zu modifizierende veränderliche Parameterdaten erzeugt und/oder von der Applikation werden zu modifizierende veränderliche Parameterdaten bereitgestellt;
Über eine Schnittstelle werden die in der Applikation erzeugten und/oder von der Applikation erzeugten modifizierten Parameterwerte in das wenigstens eine Datenfeld mit veränderlichen Parameterdaten der Chipkarte oder Chipkartenapplikation geschrieben und dort abgespeichert.

Das Verfahren wird bei einer wie weiter oben beschriebenen erfindungsgemäßen Chipkarte oder Chipkartenapplikation, oder bei einem wie weiter oben beschriebenen erfindungsgemäßen Endgerät durchgeführt. Zu den Merkmalen und Details sowie der Funktionsweise des erfindungsgemäßen Verfahrens wird hinsichtlich der Offenbarung deshalb vollinhaltlich auch auf die vorstehenden Ausführungen zur erfindungsgemäßen Chipkarte oder Chipkartenapplikation und zum erfindungsgemäßen Endgerät Bezug genommen und verwiesen.

Bevorzugt ist das Verfahren zum Testen einer Chipkarte oder Chipkartenapplikation oder zum Durchführen von Simulationen der Chipkarte oder Chipkartenapplikation ausgebildet.

Wenn die Chipkarte oder Chipkartenapplikation in einem Endgerät für ein Kommunikationsnetz, insbesondere für ein Mobilfunknetz, implementiert ist, und das Endgerät eine Eingabeapplikation zur Generierung von Parameterdaten für die Chipkarte oder Chipkartenapplikation und zur Bereitstellung der generierten Parameterdaten in der Applikation zur Erzeugung und/oder Bereitstellung von den veränderlichen Parameterdaten aufweist, ist das Verfahren bevorzugt dadurch gekennzeichnet, dass die zu verändernden Parameterdaten über eine im Endgerät vorgesehene Eingabeeinrichtung, die über eine Schnittstelle mit der Eingabeapplikation verbunden ist, generiert werden und/oder dass die zu verändernden Parameterdaten über eine vom Endgerät räumlich getrennte Eingabeeinrichtung erzeugt und über eine Schnittstelle zur im Endgerät implementierten Eingabeapplikation übertragen werden.

Bevorzugt kann wiederum vorgesehen sein, dass die Applikation zur Erzeugung und/oder Bereitstellung von den veränderlichen Parameterdaten, die auf der Chipkarte oder in der Chipkartenapplikation implementiert ist, ein Bestandteil der Eingabeapplikation ist, Insbesondere kann auch vorgesehen sein, dass es sich bei der Eingabeapplikation um diese Applikation zur Erzeugung und/oder Bereitstellung von den veränderlichen Parameterdaten, die auf der Chipkarte oder in der Chipkartenapplikation implementiert ist, handelt. In anderer Ausgestaltung kann vorgesehen sein, dass die Eingabeapplikation eine Schnittstelle zu der Applikation zur Erzeugung und/oder Bereitstellung von den veränderlichen Parameterdaten aufweist. In diesem Fall wirkt die Eingabeapplikation mit der Applikation zusammen. Die Eingabeapplikation ist insbesondere auf/in dem Endgerät implementiert.

Bevorzugt ist in weiterer Ausgestaltung vorgesehen, dass nachdem die erzeugten modifizierten Parameterwerte in das wenigstens eine Datenfeld mit veränderlichen Parameterdaten der Chipkarte oder Chipkartenapplikation geschrieben worden sind, eine Refresh-Prozedur oder Neustart-Prozedur der Chipkarte oder Chipkartenapplikation oder eines Endgeräts, in dem die Chipkarte oder Chipkartenapplikation implementiert ist, durchgeführt wird,

Wenn die Chipkarte oder Chipkartenapplikation eine erste Starteinrichtung zum Durchführen einer ersten Startprozedur für den anschließenden Betrieb in einem Betriebsmodus, insbesondere unter Eingabe einer ersten PIN, und eine zweite Starteinrichtung zum Durchführen einer zweiten Startprozedur für die Durchführung einer Entblockierungsprozedur der Chipkarte oder Chipkartenapplikation, insbesondere unter Eingabe einer zweiten PIN, aufweist, ist bevorzugt vorgesehen, dass, wenn bei oder nach Durchführung der Refresh-Prozedur oder der Neustart-Prozedur eine Blockierung der Chipkarte oder Chipkartenapplikation oder eines Endgeräts, in dem die Chipkarte oder Chipkartenapplikation implementiert ist, stattfindet, die zweite Startprozedur durchgeführt und eine Entblockierung der Chipkarte oder Chipkartenapplikation oder eines Endgeräts, in dem die Chipkarte oder Chipkartenapplikation implementiert ist, herbeigeführt wird.

Bei Durchführung der Entblockierungsprozedur während einer zweiten Startprozedur wird bevorzugt der in der Chipkarte oder Chipkartenapplikation befindlichen MCC-Wert auf 001 und der MNC-Wert auf 01 gesetzt.

Ein Beispiel für den grundsätzlichen Ablauf des Verfahrens wird nun anhand des SIM Lock beschrieben. Dabei ist vorgesehen, dass es sich bei dem Kommunikationsnetz um ein Mobilfunknetz handelt und das Endgerät ein dem Mobilfunknetz zugeordnetes Endgerät, beispielsweise ein Mobiltelefon, ist. Beispielsweise muss hierzu die IMSI (International Mobile Subscriber Identity eingestellt werden. Um die Einstellungen der IMSI zu ändern müssen Einträge in einem SIM-Datenfeld geändert werden. Hierzu müssen dann bei der Eingabeapplikation beziehungsweise der auf der SIM implementierten Applikation mittels Eingabematrix über eine Eingabeeinrichtung, beispielsweise die Eingabeeinrichtung des Endgeräts, die erforderlichen Daten eingegeben werden. Durch verschiedene Matrixstrukturen können verschiedene Eingabebereiche auf der Applikation abgedeckt werden. Wird das Endgerät geblockt, beispielsweise durch einen SIM Lock, kann es nur ausgeschaltet werden, es ist ansonsten völlig funktionslos. Jedoch ist eine Entsperrung nun über die zweite Startprozedur möglich.

Die vorliegende Erfindung betrifft insbesondere eine Chipkarte für den Einsatz in einem Endgerät, welches einem Kommunikationsnetz zugeordnet ist, aufweisend wenigstes ein Datenfeld mit veränderlichen Parameterdaten. Um auf der Chipkarte gespeicherte Parameterdaten verändern zu können, ist vorgesehen, dass die Chipkarte eine Applikation aufweist, die zusätzlich zu dem wenigstens einen Datenfeld mit veränderlichen Parameterdaten auf der Chipkarte implementiert ist, dass die Applikation zur Erzeugung und/oder Bereitstellung von den veränderlichen Parameterdaten ausgebildet ist, und dass eine Schnittstelle zwischen der Applikation und dem wenigstens einen Datenfeld mit veränderlichen Parameterdaten vorgesehen ist. Weiterhin wird ein Endgerät mit einer solchen Chipkarte beschrieben, wobei das Endgerät zusätzlich eine Eingabeapplikation zur Generierung von Parameterdaten für die Chipkarte und zur Bereitstellung der generierten Parameterdaten in der Applikation zur Erzeugung und/oder Bereitstellung von den veränderlichen Parameterdaten aufweist. Beschrieben wird ferner ein Verfahren zum Modifizieren von auf einer Chipkarte oder Chipkartenapplikation befindlichen Parameterdaten.

Die Erfindung wird nun anhand von Ausführungsbeispielen unter Bezugnahme auf die beiliegenden Zeichnungen näher erläutert. Es zeigen
- Figur 1: in schematischer Darstellung ein Endgerät, auf dem das erfindungsgemäße Verfahren abläuft; und
- Figur 2: das Ablaufbeispiel einer Einstellung einer IMSI für einen SIM Lock

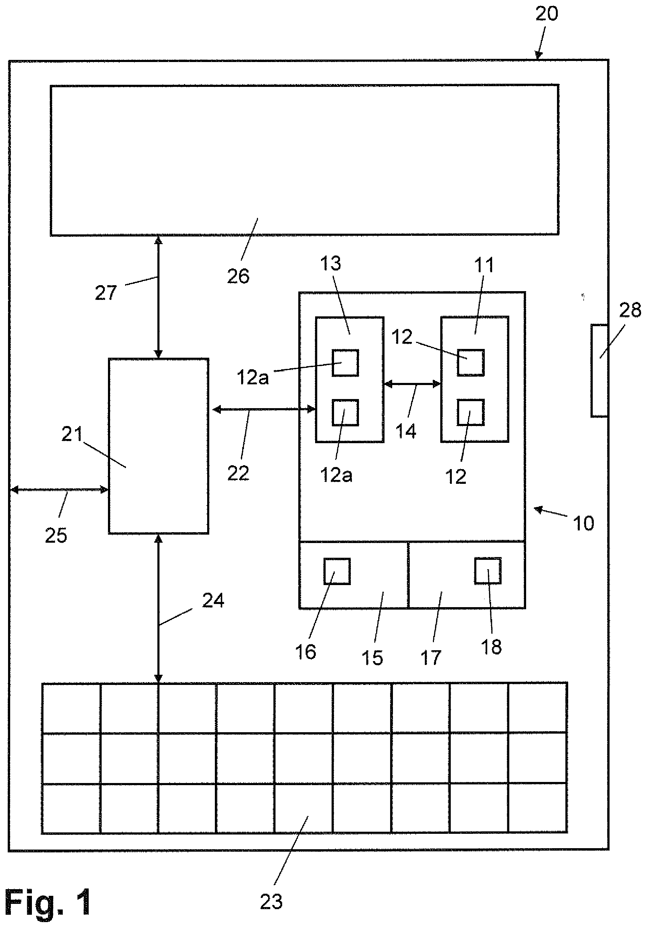

In der Figur 1 ist ein Endgerät 20 dargestellt, das einem als Mobilfunknetz zugeordneten Kommunikationsnetz zugeordnet ist. Das Endgerät 20 ist insbesondere als Mobiltelefon ausgebildet. Das Endgerät 20 verfügt in herkömmlicher Weise über eine Eingabeeinrichtung 23 in Form einer Tastatur und über eine Anzeigeeinrichtung 26 in Form eines Displays. Weiterhin ist in dem Endgerät 20 eine Chipkarte 10 in Form einer SIM-Karte eingelegt.

Auf der Chipkarte 10 befindet sich wenigstens ein Datenfeld 11, in dem veränderliche Parameterdaten 12 abgelegt sind. Bei den Parameterdaten handelt es sich insbesondere um Daten bezüglich der Identifikation und/oder Authentifizierung eines Nutzers und/oder des Endgeräts 20 im Kommunikationsnetz. Zusätzlich ist auf der Chipkarte 10 eine Applikation 13 in Form einer Applikationssoftware implementiert, über die die Parameterdaten 12 in dem wenigstens einen Datenfeld 11 auf der Chipkarte 10 verändert werden können.

Um dies realisieren zu können, verfügt das Endgerät 20 über eine Eingabeapplikation 21. Beispielsweise können die Eingabeapplikation 21 und die Applikation 13 der Chipkarte 10 identisch sein. Es ist jedoch auch denkbar, dass die Eingabeapplikation ein fester Bestandteil, beispielsweise ein softwarebasierter Bestandteil des Endgeräts 20 ist, während die Applikation13 Bestandteil der Chipkarte 10 ist. In diesem Fall ist eine Schnittstelle 22 zum Austausch von Daten zwischen der Eingabeapplikation 21 und der Applikation 13vorgesehen.

Sollen nun Parameterdaten 12 im Datenfeld 11 auf der Chipkarte 10 geändert werden, die Eingabeapplikation 21 und die Applikation 13 auf der Chipkarte 10 aktiviert. Über die Eingabeeinrichtung 23 werden die Werte für die zu ändernden Parameterdaten erzeugt und über eine Schnittstelle 24 zur Eingabeapplikation 21 übertragen. Über eine weitere Schnittstelle 27 können die eingegebenen, zu verändernden Parameterdaten auch auf der Anzeigeeinrichtung 26 des Endgeräts 20 dargestellt werden. Alternativ oder zusätzlich kann das Endgerät 20 eine Schnittstelle 25 zu einer entfernt liegenden Eingabeeinrichtung (nicht dargstellt) aufweisen, so dass die Eingabe auch über eine solche entfernt liegende Eingabeeinrichtung erfolgen kann.

Die eingegebenen zu verändernden Parameterdaten werden über die Schnittstelle 22 von der Eingabeapplikation 21 zur Applikation 13 auf der Chipkarte übertragen und dort als zu verändernde Parameterdaten 12a bereitgestellt.

Schließlich ist eine Schnittstelle 14 zwischen der Applikation 13 und dem wenigstens einen Datenfeld 11 mit veränderlichen Parameterdaten 12 vorgesehen. Über diese Schnittstelle 14 können die veränderten Parameterdaten 12a von der Applikation 13 zu dem entsprechenden wenigstens einen Datenfeld 11 übertragen werden. Beispielsweise können über die Schnittstelle 14 die Parameterdaten 12a von der Applikation13 in das Datenfeld 11 geschrieben werden, oder es werden bestehende Parameterdaten 12 im Datenfeld 11 durch die veränderten Parameterdaten 12a überschrieben.

Nachdem die Veränderung der Parameterdaten abgeschlossen ist, wird das Endgerät 20 über eine Einrichtung 28 zum Refresh und/oder Neustart, beispielsweise einen Pushbutton, refreshed oder neu gestartet, insbesondere um die entsprechenden neuen Einträge zu aktivieren.

Sollte das Endgerät 20 nun eine Fehlfunktion haben oder nicht mehr bedienbar sein, kann es mittels einer zweiten Startmöglichkeit neu gestartet werden. Dazu weist die Chipkarte 10 eine erste Starteinrichtung 15 zum Durchführen einer ersten Startprozedur für den anschließenden Betrieb der Chipkarte 10 in einem Betriebsmodus, sowie eine zweite Starteinrichtung 17 zum Durchführen einer zweiten Startprozedur für die Durchführung einer Entblockierungsprozedur der Chipkarte 10 auf. Beispielsweise ist der ersten Starteinrichtung 15eine erste PIN 16 zugeordnet, während der zweiten Starteinrichtung 17 eine zweite PIN 18 zugeordnet ist.

Wenn die Chipkarte 10, beziehungsweise das Endgerät 20 blockiert ist und die zweite PIN 18, die Entblockierungs-PIN, eingegeben wird, fährt das Endgerät 20 wieder hoch. Dabei bucht sich das Endgerät 20 jedoch nicht im Kommunikationsnetz ein. Vielmehr wird dem Endgerät 20 vermittelt, dass es an einem Simulator angeschlossen ist. Dadurch wird ermöglicht, dass die blockierten Einstellungen zurückgesetzt werden. Dann wird es möglich, erneut an die Werkzeuge zu gelangen, so dass weitere Änderungen der Parameterdaten vorgenommen werden können, damit das Endgerät 20 wieder im normalen Betriebsmodus angefahren und betrieben werden kann. Ist dies geschehen, kann das Endgerät 20 beispielsweise wieder über die erste PIN 16 aktiviert werden. Bevorzugt wird für die Durchführung der Entblockierungsprozedur der Chipkarte 10 oder des Endgeräts 20 der MCC-Wert auf 001 und der MNC-Wert auf 01 gesetzt.

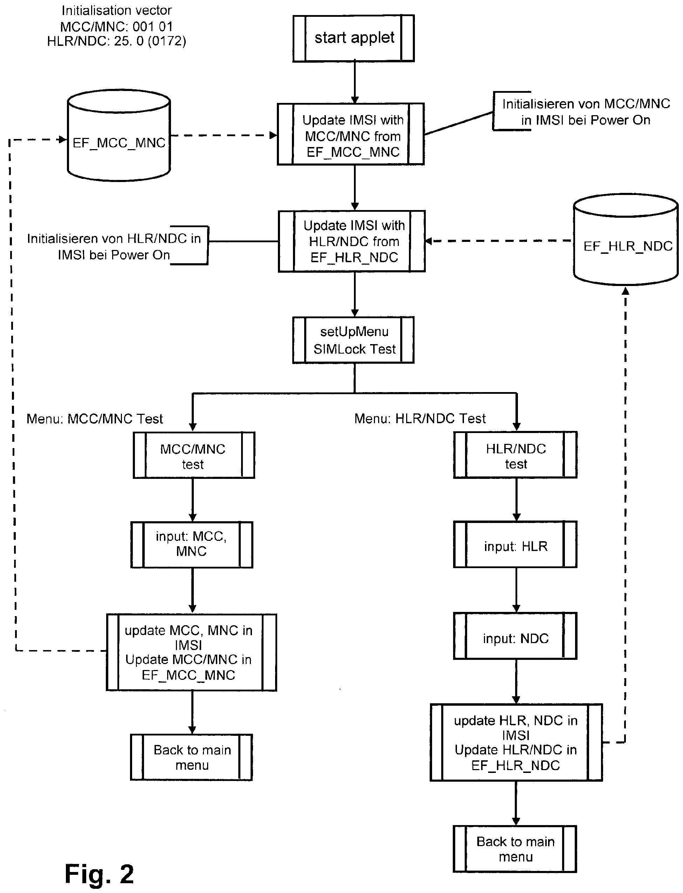

Ein Beispiel für den grundsätzlichen Ablauf des Verfahrens wird nun am Beispiel des SIM Lock unter Bezugnahme auf Figur 2 beschrieben. Hierzu muss die IMSI für den SIM Lock eingestellt werden. In dem in Figur 2 dargestellten Ablauf bedeuten MCC - Mobile Country Code, MNC - Mobile Natoinal Code, HLR - Home location REGISTERED MAIL, NDC - National Dialing Code. Um die Einstellungen der IMSI zu ändern müssen die Einträge im SIM-Datenfeld 6F07 geändert werden. Hierzu müssen dann bei der Applikation 13 mittels Eingabematrix die erforderlichen Daten eingegeben werden. Durch verschiedene Matrixstrukturen können verschiedene Eingabebereiche in der Applikation 13 abgedeckt werden. Wird das Gerät geblockt, beispielsweise aufgrund eines SIM Lock, kann es nur Ausgeschaltet werden, es ist ansonsten völlig funktionslos. Aber eine Entsperrung ist nun, wie vorstehend beschrieben, über die zweite Startprozedur möglich.

### Bezugszeichenliste

- 10: Chipkarte
- 11: Datenfeld
- 12: Veränderliche Parameterdaten
- 12a: Veränderliche Parameterdaten
- 13: Applikation
- 14: Schnittstelle
- 15: Erste Starteinrichtung
- 16: Erste PIN
- 17: Zweite Starteinrichtung
- 18: Zweite PIN

- 20: Endgerät
- 21: Eingabeapplikation
- 22: Schnittstelle
- 23: Eingabeeinrichtung
- 24: Schnittstelle zur Eingabeeinrichtung
- 25: Schnittstelle zu einer vom Endgerät räumlich getrennten Eingabeeinrichtung
- 26: Anzeigeeinrichtung (Display)
- 27: Schnittstelle zwischen Eingabeapplikation und Anzeigeeinrichtung
- 28: Einrichtung zum Refresh/Neustart des Endgeräts

## Patentansprüche

1. Chipkarte (10) oder Chipkartenapplikation in Form einer SIM oder SIM-Applikation oder USIM oder USIM-Applikation für den Einsatz in einem Endgerät (20), welches einem Kommunikationsnetz zugeordnet ist, aufweisend wenigstes ein Datenfeld (11) mit veränderlichen Parameterdaten (12), bei denen es sich um Daten bezüglich der Identifikation und/oder Authentifizierung eines Nutzers und/oder des Endgeräts in einem Kommunikationsnetz handelt, wobei die Chipkarte (10) oder Chipkartenapplikation eine Applikation (13), insbesondere eine Applikationssoftware aufweist, die zusätzlich zu dem wenigstens einen Datenfeld (11) mit veränderlichen Parameterdaten (12) auf der Chipkarte (10) oder in der Chipkartenapplikation implementiert ist, durch die die Parameterdaten in dem wenigstens einen Datenfeld (1) verändert werden können, wobei die Applikation (13) zur Erzeugung und/oder Bereitstellung von den veränderlichen Parameterdaten (12a) ausgebildet ist, wobei eine Schnittstelle (14) zwischen der Applikation (13) und dem wenigstens einen Datenfeld (11) mit veränderlichen Parameterdaten (12) vorgesehen ist, über die Parameterdaten von der Applikation in das Datenfeld geschrieben werden, oder bestehende Parameterdaten im Datenfeld durch die veränderten Parameterdaten überschrieben werden, wobei die Chipkarte (10) oder Chipkartenapplikation eine erste Starteinrichtung (15) zum Durchführen einer ersten Startprozedur für den anschließenden Betrieb der Chipkarte (10) oder Chipkartenapplikation in einem Betriebsmodus, und eine zweite Starteinrichtung (17) zum Durchführen einer zweiten Startprozedur für die Durchführung einer Entblockierungsprozedur der Chipkarte (10) oder Chipkartenapplikation aufweist.

2. Chipkarte oder Chipkartenapplikation nach Anspruch 1, **dadurch gekennzeichnet, dass** der ersten Starteinrichtung (15) eine erste PIN (16) zugeordnet ist und dass der zweiten Starteinrichtung (17) eine zweite PIN (18) zugeordnet ist.

3. Chipkarte oder Chipkartenapplikation nach Anspruch 1 oder 2, **dadurch gekennzeichnet, dass** die zweite Starteinrichtung (17) für die Durchführung einer Entblockierungsprozedur der Chipkarte (10) oder Chipkartenapplikation ausgebildet ist, bei der der MCC-Wert auf 001 und der MNC-Wert auf 01 gesetzt wird.

4. Endgerät (20) für ein Kommunikationsnetz, insbesondere für ein Mobilfunknetz, aufweisend eine Chipkarte (10) oder Chipkartenapplikation nach einem der Ansprüche 1 bis 3, weiterhin aufweisend eine Eingabeapplikation (21) zur Generierung von Parameterdaten für die Chipkarte (10) oder Chipkartenapplikation und zur Bereitstellung der generierten Parameterdaten in der Applikation (13) zur Erzeugung und/oder Bereitstellung von den veränderlichen Parameterdaten (12a).

5. Endgerät nach Anspruch 4, **dadurch gekennzeichnet, dass** die Applikation (13) zur Erzeugung und/oder Bereitstellung von den veränderlichen Parameterdaten (12a) Bestandteil der Eingabeapplikation (21) ist, oder dass die Eingabeapplikation (21) eine Schnittstelle (22) zu der Applikation (13) zur Erzeugung und/oder Bereitstellung von den veränderlichen Parameterdaten (12a) aufweist.

6. Endgerät nach Anspruch 4 oder 5, **dadurch gekennzeichnet, dass** die Eingabeapplikation (21) eine Schnittstelle zu einer im Endgerät (20) vorgesehenen Eingabeeinrichtung (23) aufweist und/oder dass die Eingabeapplikation (21) eine Schnittstelle (25) zu einer vom Endgerät (20) räumlich getrennten Eingabeeinrichtung aufweist.

7. Endgerät nach einem der Ansprüche 4 bis 6, **dadurch gekennzeichnet, dass** dieses eine Einrichtung (28) zum Refresh und/oder Neustart des Endgeräts (20) aufweist.

8. Verfahren zum Modifizieren von auf einer Chipkarte (10) oder Chipkartenapplikation befindlichen Parameterdaten (12), bei denen es sich um Daten bezüglich der Identifikation und/oder Authentifizierung eines Nutzers und/oder des Endgeräts in einem Kommunikationsnetz handelt, wobei das Verfahren bei einer Chipkarte (10) oder Chipkartenapplikation nach einem der Ansprüche 1 bis 3 oder bei einem Endgerät (20) nach einem der Ansprüche 4 bis 7 durchgeführt wird, wobei die Parameterdaten (12) in wenigstens einem Datenfeld (11) der Chipkarte (10) oder der Chipkartenapplikation gespeichert sind, wobei die Chipkarte (10) oder Chipkartenapplikation eine Applikation (13), insbesondere eine Applikationssoftware aufweist, die zusätzlich zu dem wenigstens einen Datenfeld (11) mit veränderlichen Parameterdaten (12) auf der Chipkarte (10) oder in der Chipkartenapplikation implementiert ist, durch die die Parameterdaten in dem wenigstens einen Datenfeld (1) verändert werden können, **gekennzeichnet durch** folgende Schritte:
In der Applikation (13) werden zu modifizierende veränderliche Parameterdaten (12a) erzeugt und/oder von der Applikation (13) werden zu modifizierende veränderliche Parameterdaten (12a) bereitgestellt;
Über eine Schnittstelle (14) werden die in der Applikation (13) erzeugten und/oder von der Applikation (13) bereitgestellten modifizierten Parameterwerte (12a) in das wenigstens eine Datenfeld (11) mit veränderlichen Parameterdaten (12) der Chipkarte oder Chipkartenapplikation geschrieben und dort abgespeichert, oder es werden bestehende Parameterdaten im Datenfeld durch die veränderten Parameterdaten überschrieben.

9. Verfahren nach Anspruch 8, **dadurch gekennzeichnet, dass** dieses zum Testen einer Chipkarte (10) oder Chipkartenapplikation oder zum Durchführen von Simulationen der Chipkarte (10) oder Chipkartenapplikation ausgebildet ist.

10. Verfahren nach einem der Ansprüche 8 oder 9, wobei die Chipkarte (10) oder Chipkartenapplikation in dem Endgerät (20) für ein Kommunikationsnetz, insbesondere für ein Mobilfunknetz, implementiert ist, **dadurch gekennzeichnet, dass** die zu verändernden Parameterdaten über eine im Endgerät (20) vorgesehene Eingabeeinrichtung (23), die über eine Schnittstelle (24) mit der Eingabeapplikation (21) verbunden ist, generiert werden und/oder dass die zu verändernden Parameterdaten über eine vom Endgerät (20) räumlich getrennte Eingabeeinrichtung erzeugt und über eine Schnittstelle (25) zur im Endgerät (20) implementierten Eingabeapplikation (21) übertragen werden.

11. Verfahren nach einem der Ansprüche 8 bis 10, **dadurch gekennzeichnet, dass** nachdem die erzeugten modifizierten Parameterwerte (12a) in das wenigstens eine Datenfeld (11) mit veränderlichen Parameterdaten (12) der Chipkarte (10) oder Chipkartenapplikation geschrieben worden sind, eine Refresh-Prozedur oder Neustart-Prozedur der Chipkarte (10) oder Chipkartenapplikation oder eines Endgeräts (20), in dem die Chipkarte (10) oder Chipkartenapplikation implementiert ist, durchgeführt wird,

12. Verfahren nach Anspruch 11, wobei die Chipkarte (10) oder Chipkartenapplikation die erste Starteinrichtung (15) zum Durchführen einer ersten Startprozedur für den anschließenden Betrieb in einem Betriebsmodus, insbesondere unter Eingabe einer ersten PIN (16), und die zweite Starteinrichtung (17) zum Durchführen einer zweiten Startprozedur für die Durchführung einer Entblockierungsprozedur der Chipkarte (10) oder Chipkartenapplikation, insbesondere unter Eingabe einer zweiten PIN (18), aufweist, **dadurch gekennzeichnet, dass**, wenn bei oder nach Durchführung der Refresh-Prozedur oder der Neustart-Prozedur eine Blockierung der Chipkarte (10) oder Chipkartenapplikation oder des Endgeräts (20), in dem die Chipkarte (10) oder Chipkartenapplikation implementiert ist, stattfindet, die zweite Startprozedur durchgeführt und eine Entblockierung der Chipkarte (10) oder Chipkartenapplikation oder des Endgeräts (20), in dem die Chipkarte oder Chipkartenapplikation implementiert ist, herbeigeführt wird.

13. Verfahren nach Anspruch 12, **dadurch gekennzeichnet, dass** bei Durchführung der Entblockierungsprozedur während einer zweiten Startprozedur der in der Chipkarte (10) oder Chipkartenapplikation befindliche MCC-Wert auf 001 und der MNC-Wert auf 01 gesetzt wird.

## Claims

1. A chip card (10) or a chip card application in the form of a SIM or a SIM application or a USIM or a USIM application for use in a terminal device (20) that is assigned to a communications network, comprising at least one data field (11) containing variable parameter data (12), which are data with regard to the identification and/or authentication of a user and/or of the terminal device in a communications network, whereby the chip card (10) or the chip card application has an application (13), in particular an application software, which is implemented on the chip card (10) or in the chip card application, in addition to the at least one data field (11) containing variable parameter data (12), by means of which the parameter data in the at least one dada field (11) can get modified, whereby the application (13) is designed for generating and/or providing variable parameter data (12a), whereby an interface (14) is provided between the application (13) and the at least one data field (11) containing variable parameter data (12), by means of which parameter data can get written from the application into said data field, or existing parameter data in the data field can get overwritten by modified parameter data, whereby the chip card (10) or chip card application comprises a first startup device (15) for conducting a first startup procedure for the subsequent operation of the chip card (10) or of the chip card application in an operating mode, and a second startup device (17) for conducting a second startup procedure for conducting a de-blocking procedure of the chip card (10) or the chip card application.

2. The chip card or the chip card application according to claim 1, **characterized in that** a first PIN (16) is assigned to the first startup device (15) and that a second PIN (18) is assigned to the second startup device (17).

3. The chip card or the chip card application according to claim 1 or 2, **characterized in that** the second startup device (17) is designed for conducting a de-blocking procedure of the chip card (10) or the chip card application, in which the MCC value is set to 001 and the MNC value to 01.

4. A terminal device (20) for a communications network, in particular for a mobile network, comprising a chip card (10) or a chip card application according to one of claims 1 to 3, further comprising an input application (21) for generating parameter data for the chip card (10) or the chip card application and for providing the generated parameter data in the application (13) for generating and/or providing variable parameter data (12a).

5. The terminal device according to claim 4, **characterized in that** the application (13) for generating and/or providing variable parameter data (12a) is a component of the input application (21), or that the input application (21) comprises an interface (22) to the application (13) for generating and/or providing variable parameter data (12a).

6. The terminal device according to claim 4 or 5, **characterized in that** the input application (21) comprises an interface to an input device (23) provided in the terminal device (20) and/or that the input application (21) comprises an interface (25) to an input device spatially separate from the terminal device (20).

7. The terminal device according to anyone of claims 4 to 6, **characterized in that** it comprises a device (28) for refreshing and/or restarting the terminal device (20).

8. A method for modifying parameter data (12) found on a chip card (10) or a chip card application, which are data with regard to the identification and/or authentication of a user and/or of the terminal device in a communications network, whereby the method is conducted for a chip card (10) or a chip card application according to anyone of claims 1 to 3 or for a terminal device (20) according to anyone of claims 4 to 7, whereby the parameter data (12) being stored in at least one data field (11) of the chip card (10) or of the chip card application, whereby the chip card (10) or the chip card application comprises an application (13), in particular an application software, which is implemented on the chip card (10) or in the chip card application, in addition to the at least one data field (11) containing variable parameter data (12), by means of which the parameter data in the at least one data field (11) can get modified, **characterized by** the following steps:
Variable parameter data (12a) to be modified are generated in the application (13), and/or variable parameter data (12a) to be modified are provided from the application (13);
By means of an interface (14), the modified parameter values (12a) generated in the application (13) and/or the modified parameter values (12a) provided from the application (13) are written into the at least one data field (11) containing variable parameter data (12) of the chip card or the chip card application and are stored therein, or existing parameter data in the data field are overwritten by said modified parameter data.

9. The method according to claim 8, **characterized in that** it is designed for testing a chip card (10) or a chip card application or for conducting simulations of the chip card (10) or the chip card application.

10. The method according to anyone of claims 8 or 9, whereby the chip card (10) or the chip card application being implemented in a terminal device (20) for a communications network, in particular for a mobile network, **characterized in that** the parameter data to be modified are generated via an input device (23) that is provided in the terminal device (20) and that is connected to the input application (21) via an interface (24), and/or **in that** the parameter data to be modified are generated via an input device spatially separate from the terminal device (20) and are transferred to the input application (21) implemented in the terminal device (20) via an interface (25).

11. The method according to anyone of claims 8 to 10, **characterized in that** after the generated modified parameter values (12a) have been written into the at least one data field (11) containing variable parameter data (12) of the chip card (10) or the chip card application, a refresh procedure or a restart procedure of the chip card (10) or the chip card application or of a terminal device (20) in which the chip card (10) or the chip card application is implemented, is conducted.

12. The method according to claim 11, whereby the chip card (10) or the chip card application comprises the first startup device (15) for conducting a first startup procedure for subsequent operation in an operating mode, in particular with the input of a first PIN (16), and comprises the second startup device (17) for conducting a second startup procedure for conducting a de-blocking procedure of the chip card (10) or the chip card application, in particular with the input of a second PIN (18), **characterized in that**, if a blocking of the chip card (10) or the chip card application or of the terminal device (20) in which the chip card (10) or the chip card application is implemented occurs during or after conducting the refresh procedure or the restart procedure, the second startup procedure is conducted and a de-blocking of the chip card (10) or the chip card application or of the terminal device (20), in which the chip card or the chip card application is implemented, is brought about.

13. The method according to claim 12, **characterized in that** in conducting the de-blocking procedure during a second startup procedure, the MCC value found in the chip card (10) or the chip card application is set to 001 and the MNC value is set to 01.

## Revendications

1. Carte à puce (10) ou application de carte à puce sous la forme d'une SIM ou d'une application de SIM ou d'USIM ou d'une application d'USIM pour l'emploi dans un terminal (20), lequel est associé à un réseau de communication, présentant au moins un champ de données (11) avec des données de paramètre (12) variables, lesquelles sont des données concernant l'identification et/ou l'authentification d'un utilisateur et/ou du terminal dans un réseau de communication, dans laquelle la carte à puce (10) ou l'application de carte à puce présente une application (13), en particulier un logiciel d'application, qui est implémenté, en plus de l'au moins un champ de données (11) avec des données de paramètre (12) variables, sur la carte à puce (10) ou dans l'application de carte à puce, par laquelle les données de paramètre sont modifiées dans l'au moins un champ de données (1), dans laquelle l'application (13) est réalisée pour générer et/ou pour fournir les données de paramètre (12a) variables, dans laquelle une interface (14) est prévue entre l'application (13) et l'au moins un champ de données (11) avec des données de paramètre (12) variables, par l'intermédiaire de laquelle des données de paramètre sont inscrites par l'application dans le champ de données ou des données de paramètre existantes sont écrasées dans le champ de données par les données de paramètre modifiées, dans laquelle la carte à puce (10) ou l'application de carte à puce présente un premier dispositif de démarrage (15) servant à mettre en oeuvre une première procédure de démarrage pour le fonctionnement consécutif de la carte à puce (10) ou de l'application de carte à puce dans un mode de fonctionnement et un deuxième dispositif de démarrage (17) servant à mettre en oeuvre une deuxième procédure de démarrage pour la mise en oeuvre d'une procédure de déblocage de la carte à puce (10) ou de l'application de carte à puce.

2. Carte à puce ou application de carte à puce selon la revendication 1, **caractérisée en ce qu'**un premier PIN (16) est associé au premier dispositif de démarrage (15), et qu'un deuxième PIN (18) est associé au deuxième dispositif de démarrage (17).

3. Carte à puce ou application de carte à puce selon la revendication 1 ou 2, **caractérisée en ce que** le deuxième dispositif de démarrage (17) est réalisé pour la mise en oeuvre d'une procédure de déblocage de la carte à puce (10) ou de l'application de carte à puce, où la valeur MCC est réglée sur 001 et la valeur MNC, sur 01.

4. Terminal (20) pour un réseau de communication, en particulier pour un réseau de radiotéléphonie mobile, présentant une carte à puce (10) ou une application de carte à puce selon l'une quelconque des revendications 1 à 3, présentant par ailleurs une application de saisie (21) servant à générer des données de paramètre pour la carte à puce (10) ou l'application de carte à puce et servant à fournir les données de paramètre générées dans l'application (13) pour générer et/ou fournir les données de paramètre (12a) variables.

5. Terminal selon la revendication 4, **caractérisé en ce que** l'application (13) servant à générer et/ou à fournir les données de paramètre (12a) variables fait partie intégrante de l'application de saisie (21), ou que l'application de saisie (21) présente une interface (22) avec l'application (13) servant à générer et/ou à fournir les données de paramètre (12a) variables.

6. Terminal selon la revendication 4 ou 5, **caractérisé en ce que** l'application de saisie (21) présente une interface avec un dispositif de saisie (23) prévu dans le terminal (20), et/ou que l'application de saisie (21) présente une interface (25) avec un dispositif de saisie séparé spatialement du terminal (20) .

7. Terminal selon l'une quelconque des revendications 4 à 6, **caractérisé en ce que** celui-ci présente un dispositif (28) servant à rafraîchir et/ou à redémarrer le terminal (20).

8. Procédé servant à modifier des données de paramètre (12) se trouvant sur une carte à puce (10) ou une application de carte à puce, lesquelles sont des données concernant l'identification et/ou l'authentification d'un utilisateur et/ou du terminal dans un réseau de communication, dans lequel le procédé est mis en oeuvre, pour une carte à puce (10) ou une application de carte à puce, selon l'une quelconque des revendications 1 à 3 ou, pour un terminal (20), selon l'une quelconque des revendications 4 à 7, dans lequel les données de paramètre (12) sont mémorisées dans au moins un champ de données (11) de la carte à puce (10) ou de l'application de carte à puce, dans lequel la carte à puce (10) ou l'application de carte à puce présente une application (13), en particulier un logiciel d'application, qui est implémenté, en plus de l'au moins un champ de données (11) avec des données de paramètre (12) variables, sur la carte à puce (10) ou dans l'application de carte à puce, par laquelle les données de paramètre peuvent être modifiées dans l'au moins un champ de données (1), **caractérisé par** des étapes suivantes :
des données de paramètre (12a) variables à modifier sont générées dans l'application (13) et/ou des données de paramètre (12a) variables à modifier sont fournies par l'application (13) ;
les valeurs de paramètre (12a) modifiées générées dans l'application (13) et/ou fournies par l'application (13) sont inscrites dans l'au moins un champ de données (11) avec des données de paramètre (12) variables de la carte à puce ou de l'application de carte à puce par l'intermédiaire d'une interface (14) et y sont sauvegardées, ou des données de paramètre existantes sont écrasées dans le champ de données par les données de paramètre modifiées.

9. Procédé selon la revendication 8, **caractérisé en ce que** celui-ci est réalisé pour tester une carte à puce (10) ou une application de carte à puce ou pour mettre en oeuvre des simulations de la carte à puce (10) ou de l'application de carte à puce.

10. Procédé selon l'une quelconque des revendications 8 ou 9, dans lequel la carte à puce (10) ou l'application de carte à puce est implémentée dans le terminal (20) pour un réseau de communication, en particulier pour un réseau de radiotéléphonie mobile, **caractérisé en ce que** les données de paramètre à modifier sont générées par l'intermédiaire d'un dispositif de saisie (23) prévu dans le terminal (20), qui est relié à l'application de saisie (21) par l'intermédiaire d'une interface (24), et/ou que les données de paramètre à modifier sont générées par l'intermédiaire d'un dispositif de saisie séparé spatialement du terminal (20) et sont transmises par l'intermédiaire d'une interface (25) à l'application de saisie (21) implémentée dans le terminal (20).

11. Procédé selon l'une quelconque des revendications 8 à 10, **caractérisé en ce que**, après que les valeurs de paramètre (12a) modifiées générées ont été inscrites dans l'au moins un champ de données (11) avec des données de paramètre (12) variables de la carte à puce (10) ou de l'application de carte à puce, une procédure de rafraîchissement ou de redémarrage de la carte à puce (10) ou de l'application de carte à puce ou d'un terminal (20), dans lequel la carte à puce (10) ou l'application de carte à puce est implémentée, est mise en oeuvre.

12. Procédé selon la revendication 11, dans lequel la carte à puce (10) ou l'application de carte à puce présente le premier dispositif de démarrage (15) servant à mettre en oeuvre une première procédure de démarrage pour le fonctionnement consécutif dans le mode de fonctionnement, en particulier en saisissant un premier PIN (16), et le deuxième dispositif de démarrage (17) servant à mettre en oeuvre une deuxième procédure de démarrage pour la mise en oeuvre d'une procédure de déblocage de la carte à puce (10) ou de l'application de carte à puce, en particulier en saisissant un deuxième PIN (18), **caractérisé en ce que** quand, lors de ou après la mise en oeuvre de la procédure de rafraîchissement ou de la procédure de redémarrage, un blocage de la carte à puce (10) ou de l'application de carte à puce ou du terminal (20), dans lequel la carte à puce (10) ou l'application de carte à puce est implémentée, a lieu, la deuxième procédure de démarrage est mise en oeuvre et un déblocage de la carte à puce (10) ou de l'application de carte à puce ou du terminal (20), dans lequel la carte à puce ou l'application de carte à puce est implémentée, est provoqué.

13. Procédé selon la revendication 12, **caractérisé en ce que**, lors de la mise en oeuvre de la procédure de déblocage, pendant une deuxième procédure de démarrage, la valeur MCC se trouvant dans la carte à puce (10) ou l'application de carte à puce est réglée sur 001 et la valeur MNC, sur 01.
